(19)

Europäisches
Patentamt
European
Patent Office
Office européen
des brevets

(11) **EP 1 867 655 A1**

(12) **EUROPEAN PATENT APPLICATION**
published in accordance with Art. 158(3) EPC

(43) Date of publication:
**19.12.2007 Bulletin 2007/51**

(51) Int Cl.:
***C07G 17/00*** (2006.01)

(21) Application number: **06729227.6**

(22) Date of filing: **16.03.2006**

(86) International application number:
**PCT/JP2006/305230**

(87) International publication number:
**WO 2006/109405 (19.10.2006 Gazette 2006/42)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.04.2005 JP 2005110500**

(71) Applicant: **Asahi Breweries, Ltd.**
**Tokyo 104-8323 (JP)**

(72) Inventors:
 • **WATANABE, Takehiro, Nikka Whisky Distilling
   Co.Ltd
   Hirosaki-shi
   Aomori 036-8336 (JP)**
 • **FUJITA, Rumi, Asahi Brewery, Ltd.
   Moriya-shi
   Ibaraki 302-0106 (JP)**

 • **TAGASHIRA, Motoyuki
   Midori, 1-chome, Moriya-shi
   Ibaraki, 3020106 (JP)**
 • **HIGUCHI, Seiichi
   1-21, Midori 1-chome, Moriya-shi
   Ibaraki 3020106 (JP)**
 • **KANDA, Tomomasa
   1-21, Midori 1-chome, Moriya-shi
   Ibaraki 3020106 (JP)**
 • **TANABE, Masayuki
   1-21, Midori 1-chome, Moriya-shi
   Ibaraki 3020106 (JP)**

(74) Representative: **Vaillant, Jeanne et al
Ernest Gutmann - Yves Plasseraud S.A.S.
3, rue Auber
75009 Paris (FR)**

(54) **METHOD FOR PREPARATION OF PLANT EXTRACT**

(57)    It is intended to develop a technique for producing a water-soluble polyphenol at high purity and with high efficiency in a short time from hop bract or the like which is a by-product in the beer brewing. A method for preparation of a purified plant extract comprising steps of treating a plant extract with a clay mineral such as bentonite and removing any divalent cations from the resulting product; a method for producing a polyphenol comprising steps of passing the purified plant extract through a column to adsorb polyphenols onto the column and passing a solvent though the column to elute a water-soluble polyphenol from the column; and a method for producing a water-soluble hop bract polyphenol comprising steps of adding bentonite to a hop bract extract and allowing the resulting mixture to stand under acidic conditions, performing solid-liquid separation to produce a supernatant, purifying the supernatant through a column to give a pholyphenol-containing fraction, cooling the fraction and allowing the cooled fraction to stand to cause the precipitation of water-insoluble ingredients and performing solid-liquid separation to give the desired water-soluble hop bract polyphenol.

**EP 1 867 655 A1**

## Description

Technical Field

The present invention relates to a method of producing a plant extract, more particularly, to a method for eliminating a divalent cation from a plant extract using safe bentonite which is used for food or as an ingredient of food; and a method of solubilizing a plant extract used for food and drinks. Especially, the invention relates to a method of producing a plant extract involving elimination of a divalent cation of hop bract polyphenol. More specifically, the invention relates to a method of efficiently producing water-soluble hop bract polyphenol in a short time by improving a refining process of polyphenol.

Background Art

Hop is a perennial plant of the family Cannabaceae, wherein Lupulin (which is the fine yellow granule found upon the base of the hop cone bract) present in a strobile (which is a ripen unfertilized female flower) is a bitter and aromatic principal ingredient and an important ingredient for making beer along with yeast and malt. Hop bract is a substance obtained by removing luplin from the hop strobile. It is not an essential ingredient for beer brewing and thus may be discarded.

The hop bract, which is a by-product obtained during beer brewing, is not effectively used except as a fertilizer for improving soil, feedstuff, or the like. Thus, it is required to develop an efficient use of the hop bract.

It is known that polyphenols contained in hop bract have useful functions such as antioxidation, stabilization of frothing malt drinks, anticariogenecity, deodorization, inhibition of metastases of cancer cells, inhibition of topoisomerase, etc.

Thus, a method of extracting polyphenols attracts attention in regard to effective use of hop bract. However, hop bract includes a large quantity of impurities such as wax, fibers, or the like; which complicates a process of extracting and purifying polyphenols.

There are various methods to extract polyphenols from plants, for example, a hydrothermal extraction, a supercritical extraction and an alcohol extraction. However, depending on the method utilized, divalent cations in a Bordeaux mixture, which is used for plant derivatives and organic farming, may also be extracted along with polyphenols and may exist in the plant extract.

Divalent cations are not a problem in the Food Sanitation Law. However, hundreds of ppm of divalent cations may be present after refining polyphenol fractions from hop bract or the pericarp of grapes, especially, after a powdering process. A chelate resin can eliminate the divalent cations, but it also reduces a considerable amount of an intended element of polyphenol at the same time. Thus, it is required to develop a method for stably and efficiently eliminating divalent cations.

Furthermore, when hop bract polyphenol fractions according to a conventional production method are added to or mixed with beverages and drinks, an insoluble substance is produced or the beverages and drinks become turbid, thereby deteriorating the quality of the beverages and drinks. Thus, it is also demanded to develop a method for producing a water-soluble polyphenol fraction.

A method for producing hop bract polyphenol has been proposed (for example, see Patent Literature 1), but the method has the following disadvantages:

(1) As the turbidity of filtrate is not sufficiently reduced by a process of filtering a hop bract extract with diatomite, clogging of a column is encountered during a refining process when using a synthetic absorbent, causing loss of polyphenol.
(2) Of solid substances obtained by the synthetic absorbent in the refining process with the column, purity of water-soluble polyphenol is about 50%, which is low. Thus, the subsequent precipitation requires a long time.
(3) When polyphenol is added to or mixed with beverages or drinks, an insoluble substance is produced or the beverages and drinks become turbid.
(4) Hundreds of ppm of divalent cations per powder are present even after a refining process.

Patent Literature 1: WO2004/052898

Disclosure of the Invention

Problems to be Solved by the Invention

Accordingly, the present invention provides a method of producing a refined plant extract, more particularly a method for efficiently producing highly purified water-soluble hop bract polyphenol in a short period of time.

Means for Solving the Problems

As a result of intensive studies, the present inventors have found that by a method of producing hop bract polyphenol comprising the step of treating a hop bract extract with a clay mineral such as bentonite or the like under an acidic condition before a filtering process with diatomite, divalent cations can be elmiinated and the extract can be purified, thereby substantially reducing a time necessary for a refining process disclosed in a method of the Patent Document 1. In addition, not only divalent cations but an insoluble substance can be also eliminated, and thus water-soluble polyphenol is efficiently obtained; completing the present invention.

According to the present invention recited in claim 1, there is provided a method of producing a refined plant extract, comprising the step of treating a plant extract with a clay mineral to eliminate divalent cations.

According to the present invention recited in claim 2, there is provided a method according to claim 1, wherein the clay mineral is bentonite.

According to the present invention recited in claim 3, there is provided a method of producing polyphenol, comprising the steps of: pouring the refined plant extract obtained by the method according to claim 1 into a column to adsorb polyphenols; and flushing the column with a solvent to elute water-soluble polyphenol.

According to the present invention recited in claim 4, there is provided a method as recited in any one of claims 1 to 3, wherein the plant is hop.

According to the present invention recited in claim 5, there is provided a method of producing water-soluble hop bract polyphenol by solid-liquid separation, comprising the steps of: adding bentonite to a hop bract extract; keeping the hop bract extract undisturbed under an acidic condition; executing a solid-liquid separation for the hop bract extract to obtain a supernatant; performing column purification on the supernatant to obtain a polyphenol fraction; and cooling and keeping the fraction undisturbed to precipitate non water-soluble ingredients.

The present invention recited in claim 6 is the method as recited in claim 5, wherein the step of keeping the hop bract extract undisturbed under an acidic condition is performed in a pH range of between 2.0 and 4.0.

The present invention recited in claim 7 is the method as recited in claim 5 or 6, wherein a cooling temperature of the polyphenol fraction is between 0°C and 10°C and the keeping time is between 6 and 900 hours.

Effects of the Invention

According to the present invention, the following effects can be achieved:

(1) A plant extract which includes polyphenol, for example, a hop bract extract, is treated with a clay mineral to efficiently eliminate divalent cations. It is known that if a high concentration of divalent cations is present in beverages or drinks, they cause turbidity, discoloration, oxidation, or the like. For example, it is known that if Fe ions of 10 ppm and more are present in wine, Fe turbidity is generated by a low acidity and a low temperature. Similarly, Cu turbidity is generated if Cu ions of at least 0.6 ppm or more are present in wine. Therefore, if divalent cations are eliminated from a plant extract, it is expected that turbidity may not be generated when such plant extract is used for beverages or drinks;

(2) As a hop bract extract is purified by the treatment with the clay mineral, clogging does not occur in the subsequent refining process by the column with a synthetic absorbent;

(3) Water-soluble polyphenol obtained by the synthetic absorbent in the refining process with the column is improved to nearly 90% in purity, and accordingly the time required for the following precipitating process is considerably reduced; and

(4) An yield of water-soluble hop bract polyphenol is improved as much as about 18% as compared with a conventional method.

Brief Description of the Drawings

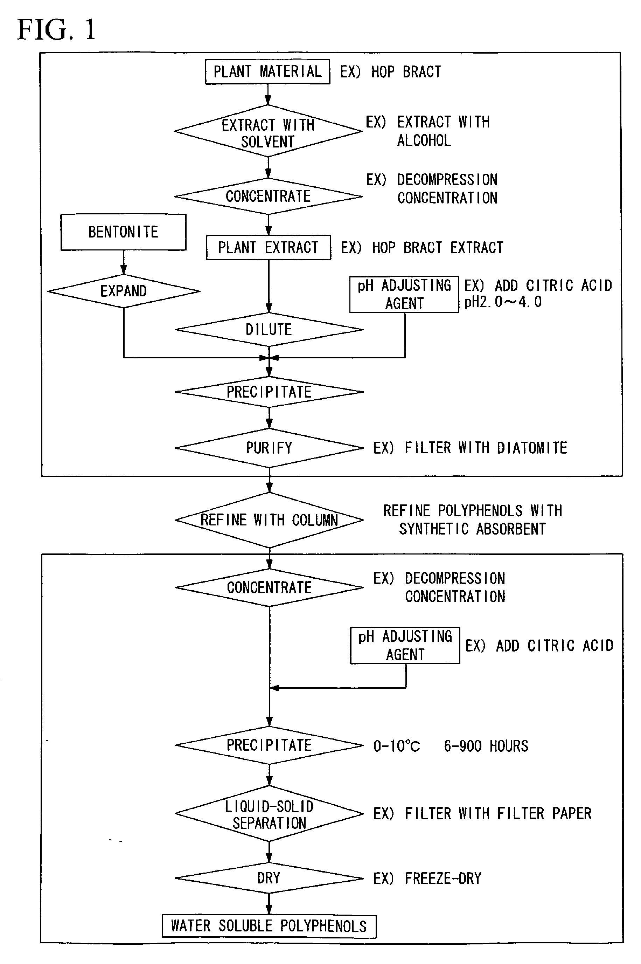

FIG. 1 is a schematic flow chart to illustrate the process of the present invention. A step of eliminating divalent cations and a step of purifying a plant extract are provided in the first half of the process; and a step of solubilizing polyphenol is provided in the second half of the process.

Best Mode.for Carrying out the Invention

Hereinafter, the present invention will be described in detail.

In the present invention, any plant which includes polyphenol can be used as a raw material, in particular, a suitable plant is a by-product obtained in the manufacturing of foods and drinks. For example, extracts from apples or grapes, used for producing fruit juice, and hop bract, which is a by-product formed during beer brewing, etc. can be used.

Here, hop bract is obtained by eliminating a lupulin from hop strobile. In general, the hop strobile is pulverized, and a lupulin is eliminated from the hop strobile through a sieve or the like, thereby yielding the hop bract.

After eliminating lupulin, the hop bract can be used as an ingredient as it is or processed into the shape of a pellet. Besides, natural hop bract, residues from hop strobile through a supercritical extraction, and the like may be used for the present invention as long as an ingredient includes the hop bract.

Clay minerals are comprised of natural minute particles rich in a hydrous silicate and refer to materials which exhibit plasticity when hydrated. Examples thereof include, kaolin mineral, pyrophyllite, talc, sericite, montmorillonite, chlorite, smectite, bentonite, acid white clay, active white clay, etc. Clay minerals have a layered structure, wherein each crystal is generally formed in the shape of a plate or flake and can accept a variety of ions in the layered structure. Among these, bentonite is excellent in adsorption and is used as a food additive; therefore it is especially preferable. Bentonite is comprised of clay minerals mostly including montmorillonite, and has properties such as swelling in water and exchanging cations.

In the present invention, it is preferred to use refined bentonite obtained by eliminating impurities from natural bentonite. Further, bentonite processed into a form of flack or powder may be used.

Hereinafter, a method of producing hop bract polyphenol will be explained as an exemplary method of producing polyphenol from a plant extract according to the present invention. Here, bentonite is used as an example of a clay mineral. FIG. 1 illustrates a schematic flow chart of the process according to the present invention.

First, hop bract as a starting material is subjected to extraction with hydrous alcohol, which is preferably an aqueous alcohol solution of 50 vol.% or less. Here, ethanol is desirably used as alcohol. A ratio in weight percent of an extracting solvent to the starting material is 1:10 to 1:20. Further, the extracting process is performed by stirring at 30 to 60°C for 60 to 180 minutes.

After completing the extracting process, a filtering process is performed to obtain an extract solution including polyphenols. If necessary, a pressing process may be performed to efficiently collect an extract solution, or water is added to the extracted hop bract and pressed again to collect an extraction solution.

The extract solution thus obtained containing polyphenol is concentrated so that remaining alcohol is 2 vol.% or less in concentration, more particularly, a solid content becomes a Brix value of 50 to 75% (Here, Brix refers to a soluble solid content, which can be obtained assuming that a measured refractive index is dependent only on a sucrose content although a refractive index is affected by water-soluble substances in an aqueous solution such as sugars, salts, protein, acids, etc.). Examples of the ordinary methods include: heat concentration, decompression concentration, and the like, with preference given to decompression concentration. After concentration, the extract solution can be preserved in a refrigerator or freezer.

Next, the concentrated extract solution is optionally diluted. In the case that a solid content of the concentrated extract solution is 50 to 75% in Brix value, the concentrated extract solution is subjected to 3- to 5-fold dilution with water and adjusted pH to an acid range of 2.0 to 4.5, preferably 3.0 to 3.5, using an acid for food processing in order to decrease the viscosity and density. In this case, an organic acid such as citric acid or the like may be used to adjust the pH.

Subsequently, bentonite is added to the extract solution, which is then kept undisturbed for 12 to 24 hours, preferably, 15 to 20 hours. Here, bentonite is mixed with water at 60°C or higher, preferably, 80 to 90°C to swell and prepared, in advance, as a 5 to 15%, preferably, 10%, aqueous solution. Bentonite is added to the extract solution in a ratio of 2000 ppm, preferably 1500 to 2000 ppm, which is the amount of bentonite to the amount of the extract solution.

Thus, divalent cations in the extract solution are adsorbed by bentonite to be eliminated, and reduced to 5 ppm or less, generally 0.5 to 1.0 ppm from 20 ppm per a solid content Brix value of 12.

The extract solution is further purified by centrifugation (usually at 5000 to 10000 G for 5 to 10 minutes), filtering (for example, with diatomite), or other solid -liquid separation; thereby separating precipitate formed by bentonite.

If necessary, the extract solution may be purified by preserving it at a low temperature of 10°C or lower for several days to one month to produce precipitates and eliminating the precipitates.

Subsequently, the extract solution with polyphenols which has been subjected to the above-described purifying process is further purified through a column filled with a synthetic adsorbent, thereby adsorbing polyphenols to the synthetic adsorbent. Here, it is preferable for the extract solution to be cooled down to a room temperature of 15 to 30°C and poured into the column. The synthetic adsorbent includes a hydrophilic vinyl polymer, hydroxylpropyl dextran, a styrene-divinylbenzene copolymer, etc., wherein a styrene-divinylbenzene copolymer may be preferably used in the present invention. The pass through time of the extraction solution is preferably set to have a space velocity (SV) of 0.5 to 10. More preferably, the SV is set to 1. Here, a SV value is defined by the following equation.

Equation 1

SV = total amount of solution being poured into a

column(L) / {amount of resin (L) × pass through time (h)}

Next, the solvent is poured into the column to wash the synthetic adsorbent which has adsorbed polyphenols. Water or an aqueous ethanol solution is used as the solvent, and in the case of ethanol solution, preference given to an aqueous solution of 10 vol.% or less. In particular, pure water is preferably used. In the washing process, impurities are removed thereby improving the purity of polyphenols. Here, it is desirable that a solvent of one to five times as much as the resin be poured into the column to wash the synthetic absorbent.

Further, to the washed synthetic adsorbent resin, hydrous alcohol, hydrous acetone, hydrous acetonitrile, and the like is poured, thereby eluting polyphenols. Here, a 20 to 65 vol.% aqueous ethanol solution may be used as a solvent, with preference given to a 30 to a 60 vol.% aqueous ethanol solution. Further, it is desirable that a solvent of one to six times as much as the adsorbent resin be poured into the column.

An alcohol ingredient is eliminated from the aqueous alcohol solution containing polyphenols by a decompression concentrator, and then the aqueous alcohol solution is concentrated so that a solid content becomes 3.5 to 5.0%.

The eluted solution thus obtained is concentrated by a decompression concentration or heat concentration and is adjusted to 3.0 or less in pH if necessary. Here, an organic acid, e.g., citric acid or the like, which is generally used for foods, is used to adjust pH.

The concentrated solution thus obtained is kept undisturbed to precipitate, that is, impurities are precipitated. Then, the concentrated solution is subjected to solid-liquid separation such as filtration. Here, the precipitating process is performed at 0 to 10°C preferably, at 0 to 4 °C, for 8 to 24 hours preferably for 8 to 12 hours.

Subsequently, from the concentrated solution, solvent is removed by any know methods such as freeze-drying, spray-drying, thereby obtaining hop bract polyphenols as powders.

Hop bract polyphenol obtained by the foregoing processes is a light brown or brown powder which has a bitter or mouth-puckery taste and a weak hop aroma.

The yield of polyphenol obtained by the aforementioned processes is 2.0 to 2.1% per hop bract. This yield is improved by approximately 18% as compared to a conventional method.

Polyphenol as used in the present invention such as hop bract polyphenol obtained as shown above has various functions as described above, and they can be used by mixing with foods, drinks, cosmetics, drugs, medical supplies, and the like.

Examples

Hereinafter, the present invention is explained in detail with reference to examples. It should be noted that the present invention is not limited to the following examples.

(Example 1)

400 g of an extract solution which includes polyphenol obtained by extracting 800 g of hop bract in an aqueous alcohol solution of 50 vol.% was dissolved in pure water at 40°C, and diluted to 1200 mL (dilution ratio is three times v/w). The resultant solution was divided into 200 mL portions in a 250 mL mess cylinder to prepare five samples.

Meanwhile, 100 mL of water was heated to 80°C and added with 5 g of bentonite and stirred for more than 12 hours to expand, thereby preparing a 5% suspension of bentonite. The suspension was added to each of the samples as shown in Table 1, and pure water was added to the samples so that each had the same volume.

The samples were kept undisturbed for one day and centrifuged to obtain a supernatant. The turbidity of the supernatant was measured by a spectrometer at 650 nm using a 10 mm cell, and the pH thereof was measured by a pH meter. Further, the supernatant was filtered by a 0.45 $\mu$m membrane filter, and the concentration of copper (Cu), the concentration of sodium (Na) and apparent concentration of polyphenol were measured. Here, the concentrations of Cu and Na were measured by an atomic absorption method, and the apparent concentration of polyphenol, was measured by a UV method at 280 nm. The UV method at 280 nm is described in the following.

It is known that polyphenols have their own absorption spectra in the UV region corresponding to respective ingredients. Polyphenols contained in apples, grapes and hop bracts are mostly catechin, proanthocyanidin, or the like, which have a maximum absorption at 280 nm. Accordingly, an absorbance of polyphenols is measured at 280 nm, thereby calculating a concentration of polyphenols. Although an absorption coefficient of polyphenols per unit weight at 280 nm is much higher than that of protein, nucleic acid, aromatic ingredients, or the like which absorbs ultraviolet rays, absorbances of those substances at 280 nm do not significantly affect the absorbance, its effects cannot be completely excluded. Thus, a concentration of polyphenol is given as an apparent concentration of polyphenol. Measurement results are shown in Table 1.

[Table 1]

| No. | Amount of Added Bentonite (ppm) | Turbidity (650 nm) | Cu conc. (ppm) | Na conc. (ppm) | Apparent Polyphenol conc. (%w/v) | pH |
|---|---|---|---|---|---|---|
| Control | 0 | - | 24.5 | 20.8 | 2.3 | 5.2 |
| 1 | 500 | 1.632 | 25.7 | 31.4 | 2.5 | 5.2 |
| 2 | 1000 | 1.185 | 25.7 | 37.8 | 2.5 | 5.2 |
| 3 | 1500 | 1.045 | 25.5 | 44.0 | 2.5 | 5.2 |
| 4 | 2000 | 0.865 | 25.2 | 49.0 | 2.4 | 5.2 |

The results shown in Table 1 illustrates that the turbidity of the extract solution which was treated with bentonite tends to be decreasingly dependent on the concentration thereof. However, it is thought that the extract solution containing polyphenols should be further examined in relation to dilution ratio and pH, since the speed of precipitation of supernatant is slow.

(Example 2)

In the same manner as Example 1, 400 g of an extract solution which included polyphenols obtained by extracting 800 g of hop bract in an alcohol solution of 50 vol.% was dissolved in pure water at 40°C, and diluted to 1200 mL (dilution ratio is three times v/w). The resultant solution was divided into 200 mL portions in a 250 mL mess cylinder to prepare five samples.

Meanwhile, 100 mL of water heated to 80°C was added with 5 g of bentonite and stirred for more than 12 hours to expand, thereby preparing a 5% suspension of bentonite. The suspension was added to each of the samples as shown in Table 2, and pure water was added to the samples so that each sample has the same volume. Then, anhydrous citric acid was added to each of the samples to adjust the pH of the samples as shown in the Table 2.

The samples were kept undisturbed for one day and centrifuged to obtain a supernatant. Performing the same processes as in Example 1, turbidity, pH, concentration of Cu, concentration of Na and apparent concentration of polyphenol were measured as illustrated in Table 2.

[Table 2]

| No. | Amount of Added Bentonite (ppm) | Turbidity (650 nm) | Cu conc. (ppm) | Na conc. (ppm) | Apparent Polyphenol conc. (%w/v) | pH of Samples |
|---|---|---|---|---|---|---|
| control | 0 | 1.615 | 25.8 | 8.9 | 2.5 | 5.1 |
| 1 | 2000 | 0.758 | 23.3 | 50.0 | 2.6 | 4.5 |
| 2 | 2000 | 0.558 | 21.6 | 50.3 | 2.6 | 4.0 |
| 3 | 2000 | 0.535 | 18.9 | 49.1 | 2.7 | 3.5 |
| 4 | 2000 | 0. 615 | 15.2 | 46.4 | 2.7 | 3.0 |

In this example, as pH values of the extract solution which was treated with bentonite in experimental groups decreased compared to that in a control group and concentration of Cu decreased, while apparent concentration of polyphenol did not significantly change.

(Example 3)

2 kg of an extract solution which includes polyphenols obtained by extracting 4 kg of hop bract as a raw material in an alcohol solution of 50 vol.% was dissolved in pure water at 40°C, and diluted to 7.2 L (dilution ratio is 3.6 times v/w). The resultant solution was divided into 1.8 L portions in a 2 L mess cylinder to prepare four samples. Anhydrous citric acid was used to adjust pH of the samples.

Meanwhile, to 500 mL of water at 80°C, was added 25 g of bentonite and stirred for more than 12 hours to expand, thereby preparing a 5% suspension of bentonite. The suspension was added to each of the samples as shown in Table 3, and pure water was added to the samples so that each has the same volume of 2000 mL.

The samples were kept undisturbed for one day and centrifuged to obtain a supernatant. A turbidity of the supernatant was measured with a spectrometer at 650 nm using a 10 mm cell, and a pH thereof was measured with a pH meter. Further, by the same method as in Example 1, the supernatant was filtered, and then concentration of Cu, concentration of Na, and apparent concentration of polyphenol were measured. Measurement results are shown in Table 3.

[Table 3]

| No. | Amount of Bentonite Added (ppm) | Turbidity (650 nm) | Cu conc. (ppm) | Na conc. (ppm) | Apparent Polyphenol conc. (%w/v) | pH of sample |
|-----|-----|-----|-----|-----|-----|-----|
| control | 0 | 1.937 | 22.2 | 8.5 | 1.9 | 5.2 |
| 1 | 2000 | 0.511 | 22.2 | 53.8 | 1.8 | 5.2 |
| 2 | 2000 | 0.298 | 8.4 | 48.4 | 1.7 | 3.0 |
| 3 | 5000 | 0.298 | 7.7 | 105.2 | 1.6 | 3.0 |

As clearly shown in Table 3, the efficiency of eliminating divalent cations and reduction in turbidity were confirmed for cases where the scale was up ten times. The efficiency of eliminating divalent cations and reduction in turbidity do rarely change in a concentration of bentonite of between 2000 and 5000 ppm. However, the concentration of Na increased as the amount of bentonite added increased, the concentration of bentonite is preferably around 2000 ppm. Table 3 shows that an efficiency of eliminating divalent cations was affected greatly by pH of a solution being treated.

Therefore, it is preferable that the amount of bentonite added be adjusted to about 2000 ppm and pH of the solution be adjusted to about 3.0.

(Example 4)

400 g of an extract solution which included polyphenols obtained by extracting 800 g of hop bract as a raw material in an alcohol solution of 50 vol.% was dissolved in pure water at 40°C, and diluted to 1440 mL (dilution ratio is 3.6 times v/w). The resultant solution was divided into 720 mL portions in a 1000 mL mess cylinder to prepare two samples. In the same manner as in Example 3, the extract solution was added with 2000 ppm of bentonite, and citric acid was used to adjust pH of the extract solution to 3.0. Then, the extract solution was diluted with pure water in the dilution rate of four. The extract solution was kept undisturbed for one day and centrifuged to obtain a supernatant. The supernatant was then diluted with pure water six times with respect to its weight, and filtered by the same method as that in Example 1, to prepare Experimental solution 1.

Meanwhile, a control group is provided as Experimental solution 2 such that the extract solution which including polyphenols is not treated with bentonite but diluted with pure water six times.

Next, each experimental solution of 1200 mL is purified at an SV value of 1 (3.3 mL/min) through a column (filler: SP850 made by Mitsubishi Chemical Corporation, 196 mL), and then pure water is poured into the column so that the Brix value at the bottom of the column becomes 0.2. Next, 600 mL of 50% ethanol (at a room temperature) is poured into the column at an SV value of 1 (3.3 mL/min). The solution is collected up to 850 mL (including the pure water that had been poured into the column) since ethanol starts of addition of ethanol. An obtained sample (column load experimental solution, 1200 mL in amount) was subjected to the same method as in Example 1 to measure concentration of Cu and concentration of Na, as shown in Table 4. Further, concentration of Cu and concentration of Na in the column extract solution (850 mL in amount) were measured, and efficiencies of eliminating Cu and Na and concentration of polyphenol were calculated, as shown in Table 5.

[Table 4]

| Sample | Amount of experimental solution (ml) | Calculated amount of extraction solution (g) | Cu content (mg) | Na content (mg) |
|---|---|---|---|---|
| Experimental solution 1 (experimental example) | 1200 | 200 | 6.7 | 38.7 |
| Experimental solution 2 (control example) | 1200 | 200 | 17.8 | 6.8 |

[Table 5]

| Sample | Cu content (mg) | Na content (mg) | Efficiency of eliminating | | Polyphenol conc. (%w/v) |
|---|---|---|---|---|---|
| | | | Cu (%) | Na (%) | |
| Experimental solution 1 (experimental example) | 1.0 | 1.5 | 85 | 96 | 1.4 |
| Experimental solution 2 (control example) | 7.1 | 0.7 | 60 | 90 | 1.3 |

As clearly shown in the tables, 60 to 85 percent of divalent cations were eliminated according to the present invention. Further, it is thought that divalent cations were not adsorbed to a resin, and thus divalent cations were eliminated by a refining process with a column. An extract solution including polyphenol, which has been treated with bentonite in an acid range by adjusting pH, was poured into a column, and then pure water was poured into the column, thereby eliminating copper which was present in a raw material down to one tenth or less.

(Example 5)

A column extract solution was subjected to alcohol elimination, and the extract solution was then concentrated to obtain a polyphenol fraction concentrated solution. The polyphenol fraction concentration solution was dried to obtain hop bract polyphenol powder 1 (which is a substance before a non-water-soluble element is eliminated). Next, the pH of the extract solution was adjusted by citric acid to 3.2, which is then kept cooled at 0°C for three days to obtain precipitates. Then, the extract solution was filtered and dried to obtain water-soluble hop bract polyphenol powder 2 (which is a substance after a non-water-soluble element is eliminated). 100 ppm aqueous solutions of the powder 1 and 2 were prepared and analyzed, the results of which are presented in Table 6. A polyphenol coefficient in Table 6 was measured as a peak area based on the pattern of molecular weight obtained by a gel permeation chromatography (GPC) / high performance liquid chromatography (HPLC). A proanthocyanidin coefficient was measured by a Porter method. A Porter method is a method to colormetrically analyze the total amount of proanthocyanidin among samples using a phenomenon where a catechin-catechin bond is broken and anthocyanidin (red pigment) is generated at the same time when dimeric or polymeric catechin oligomer (condensed tannin or proanthocyanidin) was heated under an acidic condition. Further, protein content was calculated by measuring a total amount of nitrogen by the Kjeldahl method and multiplying it by a coefficient of 6.15.

[Table 6]

| | Polyphenol coefficient (GPC-HPLC peak area) | Proanthocyanidin coefficient (Porter value) | Protein content (%w/w) |
|---|---|---|---|
| Powder 1 | 100,394 | 0.083 | 13.2 |
| Powder 2 | 114,251 | 0.088 | 6.6 |

Table 6 shows that the process of eliminating a non water-soluble ingredient improved the purity of polyphenol due to an increase in polyphenol content and proanthocyanidin content and a decrease in protein content among powdered hop bract polyphenol fraction. This is presumably because the non water-soluble element such as insoluble protein or the like which remains in the refined polyphenol fraction was extracted and precipitated to be eliminated.

Industrial Applicability

According to the present invention, a method of efficiently producing highly purified water-soluble polyphenol in a short period of time using hop bract, that is obtained as a by-product during beer brewing, is provided.
In addition, a hop bract extract solution is treated with bentonite according to the present invention, and thus divalent cations of impurities or the like can be efficiently eliminated.

**Claims**

1. A method of producing a refined plant extract, comprising the step of:

   treating a plant extract with a clay mineral to eliminate a divalent cation.

2. The method according to Claim 1, wherein the clay mineral is bentonite.

3. A method of producing polyphenol, comprising the steps of:

   pouring the refined plant extract obtained by the method according to Claim 1 into a column to adsorb polyphenols; and
   flushing the column with a solvent to elute water-soluble polyphenols.

4. The method according to any one of Claims 1-3, wherein the plant is hop.

5. A method of producing water-soluble hop bract polyphenol by solid-liquid separation, comprising the steps of:

   adding bentonite to a hop bract extract;
   keeping the hop bract extract undisturbed under an acidic condition;
   executing a solid-liquid separation for the hop bract extract to obtain a supernatant;
   performing column purification on the supernatant to obtain a polyphenol fraction; and
   cooling and keeping the fraction undisturbed to precipitate non water-soluble ingredients.

6. The method according to Claim 5, wherein the step of keeping the hop bract extract undisturbed under an acidic condition is performed in a pH range of between 2.0 and 4.0.

7. The method according to Claim 5 or 6, wherein a cooling temperature of the polyphenol fraction is between 0 °C and 10 °C and a keeping time is between 6 and 900 hours.

# FIG. 1

PLANT MATERIAL EX) HOP BRACT

EXTRACT WITH SOLVENT     EX) EXTRACT WITH ALCOHOL

CONCENTRATE     EX) DECOMPRESSION CONCENTRATION

PLANT EXTRACT EX) HOP BRACT EXTRACT

BENTONITE

EXPAND

pH ADJUSTING AGENT EX) ADD CITRIC ACID pH2.0~4.0

DILUTE

PRECIPITATE

PURIFY     EX) FILTER WITH DIATOMITE

REFINE WITH COLUMN     REFINE POLYPHENOLS WITH SYNTHETIC ABSORBENT

CONCENTRATE     EX) DECOMPRESSION CONCENTRATION

pH ADJUSTING AGENT EX) ADD CITRIC ACID

PRECIPITATE     0-10°C    6-900 HOURS

LIQUID-SOLID SEPARATION     EX) FILTER WITH FILTER PAPER

DRY     EX) FREEZE-DRY

WATER SOLUBLE POLYPHENOLS

## INTERNATIONAL SEARCH REPORT

| | International application No. |
|---|---|
| | PCT/JP2006/305230 |

A. CLASSIFICATION OF SUBJECT MATTER
*C07G17/00* (2006.01)

According to International Patent Classification (IPC) or to both national classification and IPC

B. FIELDS SEARCHED

Minimum documentation searched (classification system followed by classification symbols)
*C07G17/00* (2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus (JDream2)

C. DOCUMENTS CONSIDERED TO BE RELEVANT

| Category* | Citation of document, with indication, where appropriate, of the relevant passages | Relevant to claim No. |
|---|---|---|
| A | WO 2004/052898 A1 (Asahi Breweries, Ltd.),<br>24 June, 2004 (24.06.04),<br>Full text<br>& EP 1577315 A1 | 1-7 |
| A | JP 6-502763 A (Henkel KGaA),<br>31 March, 1994 (31.03.94),<br>Full text<br>& WO 92/09687 A1     & EP 559676 A1<br>& US 5453200 A | 1-7 |
| A | JP 63-17899 A (Yasuaki MORISADA),<br>25 January, 1988 (25.01.88),<br>Full text<br>(Family: none) | 1-7 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 April, 2006 (06.04.06) | Date of mailing of the international search report<br>18 April, 2006 (18.04.06) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004052898 A